# DEMANDE DE BREVET EUROPEEN

(11) **EP 2 775 580 A1**
(43) Date de publication de la demande: **10.09.2014**
(21) Numéro de dépôt: 14305328.8
(22) Date de dépôt: 06.03.2014
(51) Int. Cl.: H02G 3/12, H02G 3/14

(54) **Support d'appareillage électrique et appareillage électrique comprenant un tel support**

(30) Priorité: 08.03.2013 FR 1352099
(71) Demandeur: Legrand France, 87000 Limoges (FR); Legrand SNC, 87000 Limoges (FR)
(72) Inventeur: Mourgaud, Jean-François, 87220 Feytiat (FR); Buisson, Philippe, 87800 Saint Maurice les Brousses (FR); Vecseri, Akos, 6800 Hódmezovásárhely (HU)
(74) Mandataire: Orsini, Fabienne

(57) **Abrégé**

L'invention concerne un support (100) d'appareillage électrique qui comprend une âme (110) en matière métallique, couverte par un capot (120) en matière synthétique isolante qui comprend des agencements de réception d'au moins un élément fonctionnel destiné à coopérer directement avec au moins un élément conducteur pour assurer la fonction primaire d'un mécanisme d'appareillage électrique (200) à rapporter sur ledit support d'appareillage électrique.

## Description

La présente invention concerne un support d'appareillage électrique.

Ce support est généralement mis en oeuvre pour rapporter un quelconque mécanisme d'appareillage, tel que par exemple un mécanisme d'interrupteur ou de prise de courant, dans une boîte à encastrer dans une paroi quelconque ou dans un boîtier à rapporter en saillie d'une telle paroi.

Elle concerne également un appareillage électrique qui comprend un tel support d'appareillage électrique, et un mécanisme d'appareillage électrique rapporté sur ledit support d'appareillage électrique.

### ARRIÈRE-PLAN TECHNOLOGIQUE

On connaît des supports d'appareillage réalisés exclusivement en matière plastique isolante permettant de répondre ainsi aux normes d'isolation électrique.

Ces supports ont une épaisseur relativement importante pour présenter la tenue mécanique recherchée.

On connaît également, du document FR2880206 appartenant aux demanderesses, un support d'appareillage comprenant un cadre plat en matière métallique surmoulé d'une peau en matière plastique isolante.

Un tel support d'appareillage de faible épaisseur allie la rigidité grâce à son cadre métallique et la sécurité électrique grâce à sa peau isolante.

Cependant, l'opération de surmoulage de la peau isolante sur le cadre métallique du support est une opération coûteuse qui augmente le coût de fabrication du support.

On connaît par ailleurs du document FR2908562, un support d'appareillage adapté à être recouvert par une plaque de façade en forme de cadre. Ce support d'appareillage comprend une âme métallique recouverte d'un cadre de sécurité et d'un cadre support qui comprend une barre transversale de balancement sur laquelle se trouve emboîtée une touche basculante qui actionne un entraîneur d'un mécanisme d'appareillage embarqué sur le support d'appareillage.

Le document DE29616958 décrit un support d'appareillage en forme de cadre adapté à être recouvert par une plaque de façade également en forme de cadre et une membrane d'étanchéité comprenant d'une seule pièce, un premier cadre qui recouvre le cadre support d'appareillage et un deuxième cadre qui recouvre une partie interne de la plaque de façade. Cette membrane d'étanchéité est fixée à la plaque de façade par des pattes de fixation.

Outre le fait que dans les deux documents précités, il est prévu d'assembler entre elles plusieurs pièces différentes, ce qui augmente le coût de fabrication du produit final, de manière classique, selon ces documents, le mécanisme d'appareillage, rapporté sur l'un ou l'autre des supports d'appareillages décrits, est autonome en ce sens qu'il comporte tous les éléments fonctionnels assurant sa fonctionnalité primaire.

### OBJET DE L'INVENTION

Par rapport aux supports précités de l'état de technique, la présente invention propose un nouveau support d'appareillage électrique qui est rigide, dont la fabrication est peu coûteuse, qui présente une face avant esthétique, sans forme agressive, et qui assure non seulement le montage d'un socle isolant d'appareillage électrique dans une boîte électrique mais aussi le fonctionnement primaire du mécanisme de cet appareillage électrique. En d'autres termes, selon l'invention, il est proposé de reporter sur le support d'appareillage des agencements sans lesquels le mécanisme d'appareillage monté sur le support d'appareillage ne pourrait pas assurer sa fonction principale à laquelle il est destiné, même de façon dégradée.

Plus particulièrement, on propose selon l'invention un support d'appareillage électrique selon la revendication 1.

Grâce aux agencements de réception, le support d'appareillage conforme à l'invention participe directement et de façon essentielle au fonctionnement primaire du mécanisme d'appareillage rapporté sur le support, comme notamment le fonctionnement d'interrupteur ou de prise de courant. En d'autres termes, il est prévu selon l'invention d'intégrer au support d'appareillage des éléments essentiels au fonctionnement principal du mécanisme d'appareillage rapporté sur celui-ci de sorte que le mécanisme d'appareillage peut être simplifié car il n'a plus besoin d'intégrer ces éléments essentiels.

D'autres caractéristiques non limitatives et avantageuses du support d'appareillage conforme à l'invention sont énoncées dans les revendications 2 à 12.

L'invention propose également un appareillage électrique qui comprend :
- un support d'appareillage électrique conforme à l'invention, et
- un mécanisme d'appareillage électrique rapporté sur ledit support d'appareillage électrique.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un mode de réalisation d'un appareillage électrique conforme à l'invention ;
- la figure 2 est une vue schématique de face de l'appareillage électrique de la figure 1 sans sa touche d'actionnement ;
- la figure 3 est une vue partielle en coupe selon le plan G-G de la figure 2;
- la figure 4 est une vue en coupe selon le plan C-C de la figure 2;
- la figure 5 est une vue partielle en coupe selon le plan A-A de la figure 2 ;
- la figure 6 est une vue schématique de face d'un autre appareillage électrique conforme à l'invention intégrant une membrane d'étanchéité ;
- la figure 7 est une vue partielle en coupe selon le plan E-E de la figure 6;
- la figure 8 est une vue schématique de face du capot du support de l'appareillage électrique de la figure 1 ;
- la figure 9 est une vue de détail de la zone Z1 de la figure 8 ;
- la figure 10 est une vue schématique en perspective de dessus d'un autre mode de réalisation du capot du support selon l'invention ;
- la figure 11 est une vue de côté du capot de la figure 10 ;
- la figure 12 est une vue schématique en perspective de dessus d'un autre mode de réalisation du capot du support selon l'invention ;
- la figure 13 est une vue de dessous du capot de la figure 12 ;
- la figure 14 est une vue schématique de dessus d'un autre mode de réalisation du capot du support selon l'invention ;
- la figure 15 est une vue en perspective de dessus du capot de la figure 14 ;
- la figure 16 est une vue de côté du capot de la figure 14 ;
- la figure 17 est une vue en perspective éclatée d'un autre mode de réalisation du support conforme à l'invention ; et
- la figure 18 est une vue de face assemblée du support de la figure 17.

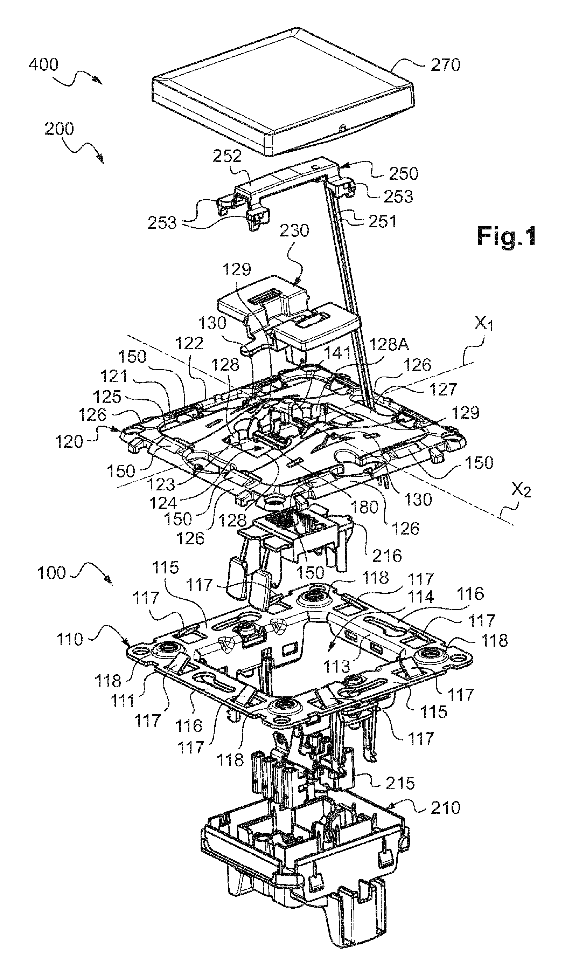

Sur la figure 1, on a représenté un support 100 d'un appareillage électrique 400 destiné à être fixé sur une boîte (non représentée) à encastrer dans une paroi quelconque, ou sur un boîtier (non représenté) à rapporter en saillie sur une telle paroi.

Pour finaliser l'aspect esthétique de l'appareillage électrique 400, le support 100 d'appareillage électrique est destiné à être recouvert par une plaque de façade enjoliveur (non représentée sur les figures) en forme de cadre, de telle manière que le bord intérieur de cette plaque de façade enjoliveur borde le mécanisme d'appareillage et que le bord extérieur de cette plaque de façade enjoliveur s'appuie sur la paroi murale, autour de la boîte murale.

Dans la suite de la description, les termes « avant » et « arrière » désigneront respectivement, lorsque le support 100 est rapporté sur la boîte murale, le lieu tourné vers l'installateur et le lieu tourné vers le fond de la boîte.

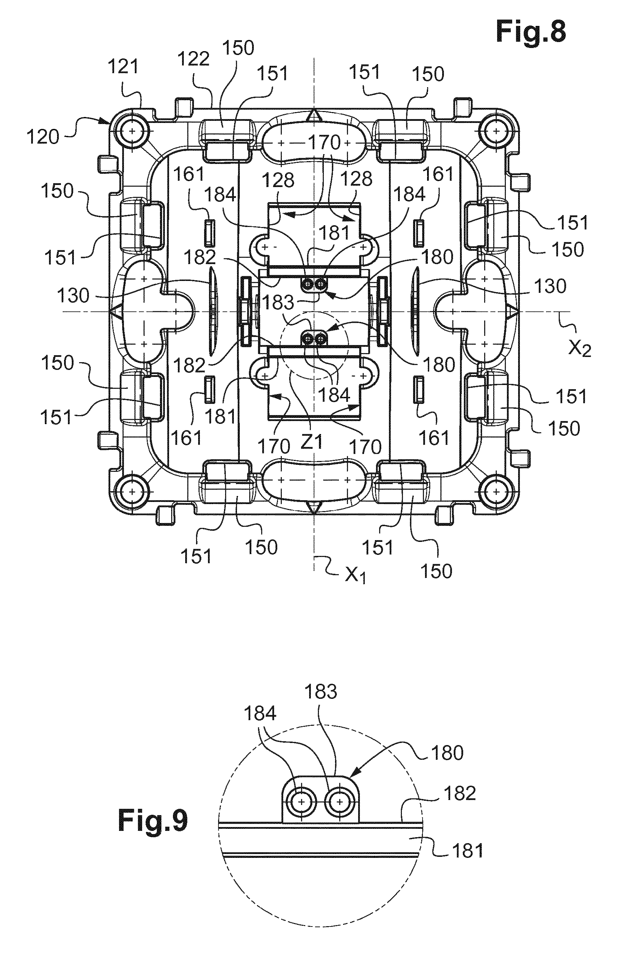

Tel que représenté sur les figures 1 et 8, le support 100 d'appareillage électrique présente une âme 110 en matière métallique et un capot 120 en matière synthétique isolante qui recouvre l'âme 110.

L'âme 110 en matière métallique confère une grande rigidité au support 100 et le capot 120 en matière synthétique isolante, qui recouvre la majeure partie des éléments métalliques du support, confère à l'utilisateur un sentiment de sécurité électrique en formant une isolation électrique.

L'âme 110 se présente sous la forme d'un cadre 111 plat ici de forme carrée, venu de formation à partir d'un feuillard métallique découpé et plié à la forme souhaitée.

Ce cadre 111 comporte ainsi quatre branches 115 , 116 planes, et est défini entre un bord périphérique extérieur 112 et un bord périphérique intérieur 113 qui délimite une ouverture centrale 114 également de forme carrée.

L'ouverture centrale 114 de ce cadre 111 accueille ici un socle 210 de mécanisme d'appareillage 200.

Chacune des quatre branches 115, 116 du cadre 111 comporte des moyens d'encliquetage 117 permettant d'encliqueter la plaque de façade enjoliveur (non représentée) sur le support 100. Ces moyens d'encliquetage se présentent ici sous la forme de languettes 117 inclinées par rapport aux faces avant des branches 115, 116 du cadre 111.

Ici, comme le montre la figure 1, le capot 120 est rapporté sur l'âme 110 métallique.

Pour cela, l'âme 110 métallique comprend sur une face avant, à ses quatre coins, un moyen d'assujettissement 118 (tel qu'un moyen d'engagement, d'encliquetage, de soudage ou de boutrôlage) qui coopère avec un moyen d'assujettissement complémentaire agencé sur une face arrière du capot 120.

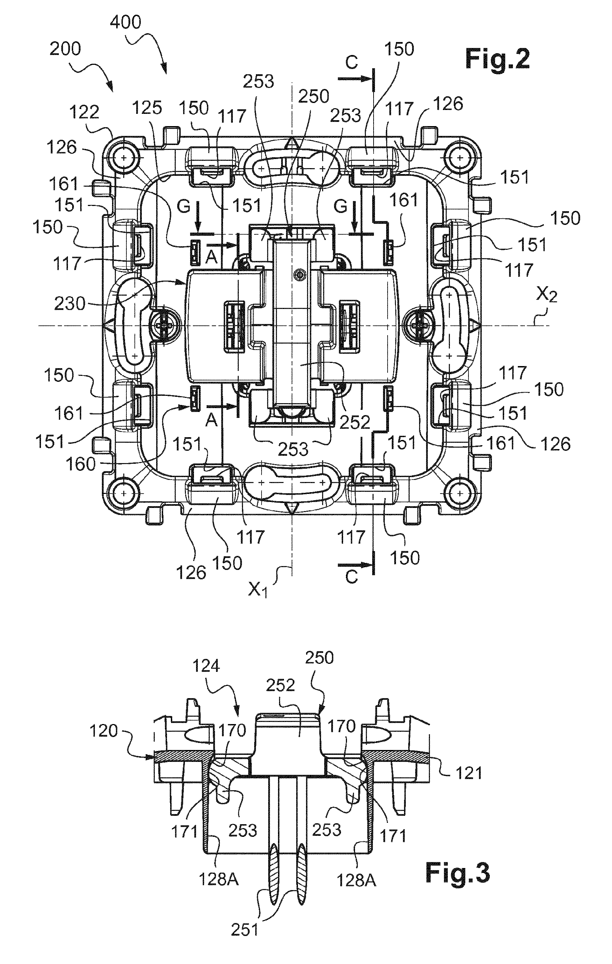

Comme les montrent les figures 1 et 2, le capot 120 en matière synthétique isolante se présente également sous la forme d'un cadre 121 dont le contour externe est carré. Ce cadre 121 est adapté à recouvrir au moins partiellement le cadre 111 de l'âme 110 métallique du support 100.

Ce cadre 121 présente un bord périphérique extérieur 122 qui suit un contour carré et un bord périphérique intérieur 123 qui délimite une ouverture 124 centrale ici de contour 128 rectangulaire s'étendant selon un axe longitudinal X1. Le cadre 121 du capot 120 présente également un bord intermédiaire 125 situé entre le bord périphérique extérieur 122 et le bord périphérique intérieur 123. Entre le bord intermédiaire 125 et le bord périphérique extérieur 122 sont délimitées quatre branches 126 sensiblement planes, et, entre le bord intermédiaire 125 et le bord périphérique intérieur 123, est définie une face avant bossée 127 orientée vers l'avant.

Selon une caractéristique particulièrement avantageuse de l'appareillage électrique 400 représenté sur les figures, le capot 120 comprend des agencements de réception d'au moins un élément fonctionnel destiné à coopérer directement avec au moins un élément conducteur pour assurer la fonction primaire du mécanisme d'appareillage électrique 200 rapporté sur le support 100.

On entend par l'expression « pour assurer la fonction primaire d'un mécanisme d'appareillage électrique 200 » des agencements sans lesquels le mécanisme d'appareillage électrique 200 ne pourrait pas fonctionner même de façon dégradée.. C'est-à-dire que sans ces agencements de réception du support d'appareillage, par exemple, l'entraîneur d'un mécanisme d'interrupteur ne pourrait pas basculer pour entraîner le ou les contacts mobiles afin d'assurer la connexion électrique avec le ou les contacts fixes, les contacts métalliques des bornes électriques d'un mécanisme de prise de courant n'auraient pas de logements et il n'y aurait pas de leviers de déconnexion des conducteurs électriques connectés auxdites bornes électriques. Ces agencements peuvent en outre assurer une isolation électrique, une étanchéité, une signalisation d'un fonctionnement ou d'un disfonctionnement du mécanisme d'appareillage électrique, et une rigidité de l'ensemble.

Préférentiellement, le capot 120 est réalisé d'une seule pièce par moulage d'une matière plastique.

Ici, ces agencements viennent de formation avec le capot 120.

Selon le mode de réalisation préférentiel de l'appareillage électrique 400 représenté, il comprend un mécanisme d'un interrupteur électrique 200.

Ce mécanisme d'interrupteur électrique 200 comprend ici un socle d'appareillage 210 fixé dans l'ouverture centrale 114 du cadre 111 de l'âme 110 métallique, un entraineur 230 électrique, un voyant lumineux 250, et une touche d'actionnement 270 de forme carrée, adaptée à recouvrir et à coopérer avec l'entraineur 230 pour être manipulée par un utilisateur.

Le socle d'appareillage 210 loge notamment des bornes de connexions électriques 215, 216 qui ne seront pas décrites plus en détail ici.

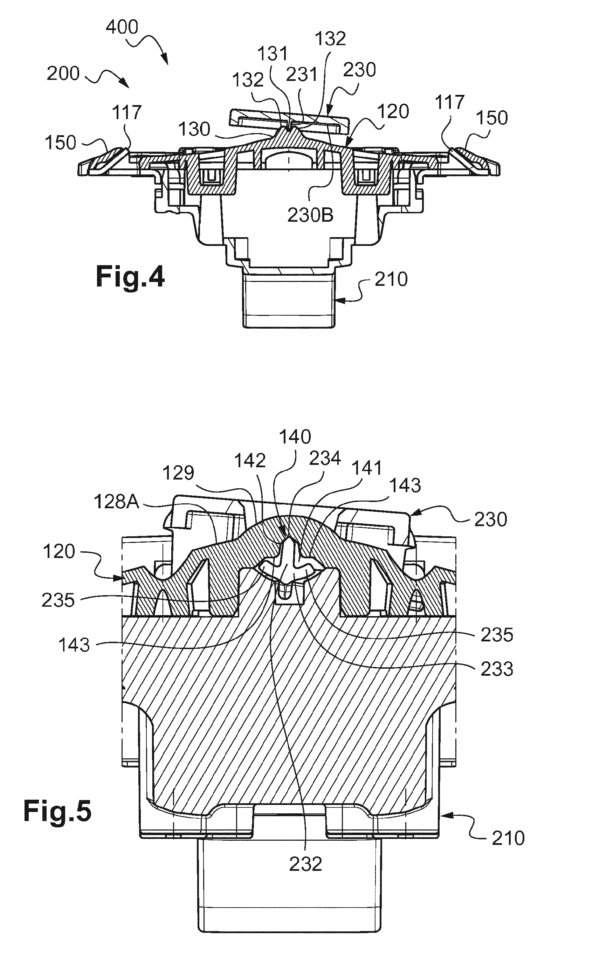

Comme le montrent les figures 1 et 4, avantageusement, les agencements du capot 120 comprennent des moyens de montage 130 de l'entraineur 230.

Avantageusement, ces moyens de montage 130 comportent des éléments de fixation et des éléments de basculement de l'entraineur 230.

Les éléments de fixation 130 de l'entraineur 230 sont ici deux éléments d'encliquetage 130 agencés sur la face avant bossée 127 du cadre 121 du capot 120, de part et d'autre de deux bords longitudinaux 128A de l'ouverture 124 rectangulaire.

Comme le montre plus particulièrement la figure 4, lesdits moyens de montage comprennent de part et d'autre de l'ouverture 124, deux chapes 130 qui s'élèvent vers l'avant à partir de la face avant bossée 127 du capot 120, chaque chape 130 comportant un logement 131 ouvert vers l'avant et présentant une section de profil en forme d'arc de cercle. Chaque logement 131 est délimité entre deux extrémités libres 132 de la chape 130.

Chaque logement 131 présente une largeur de quelques millimètres, selon un axe transversal X2 perpendiculaire à l'axe longitudinal X1, pour permettre la fixation de l'entraineur 230 sur le capot 120 (voir figures 1 et 4).

En correspondance, comme le montre plus particulièrement la figure 4, l'entraineur 230 comporte sur une face arrière 230B deux plots 231 de forme complémentaire à celle des logements 131 du capot 120.

Chaque plot 231 présente une largeur de quelques millimètres, selon l'axe transversal X2, pour permettre la fixation par emboîtage de l'entraineur 230 dans les logements 131 du capot 120.

Comme le montre la figure 4, les logements 131 des chapes 130 du capot 120 forment également ici les éléments de basculement de l'entraineur 230 par rapport au capot 120.

Ainsi, l'entraineur 230 bascule par rapport au cadre 121 du capot 120 selon l'axe transversal X2.

Comme le montre plus particulièrement la figure 5, les moyens de montage du capot 120 comportent en outre des éléments de limitation de la course de basculement de l'entraineur 230 par rapport au capot 120.

Ces éléments de limitation permettent avantageusement d'éviter la désolidarisation de l'entraineur 230 et du capot 120 lorsque l'usager appui sur la touche d'actionnement 270 de l'interrupteur 400.

En d'autres termes, ces moyens de limitation sont adaptés à éviter qu'au moins un des plots 231 de l'entraineur 230 ne sorte du logement 131 de la chape 130 correspondante du capot 120.

Les éléments de limitation comprennent deux alésages 141 d'axe X1 formés dans les deux bords longitudinaux 128A parallèles de l'ouverture centrale 124 rectangulaire du cadre 121 du capot 120 (voir figure 5).

Plus particulièrement, les bords longitudinaux 128A de l'ouverture 124 présentent des portions en arc de cercle 129 s'étendant vers l'avant (voir figure 5). Chaque alésage 141 est ici agencé au droit de cette portion d'arc de cercle 129, et s'ouvre vers l'arrière.

Chaque alésage 141 présente un contour au profil particulier avec au centre un creux pointu 142 et, de part et d'autre du creux pointu 142, deux rebords 143.

L'entraineur 230 comprend ici, en correspondance, deux doigts 232 destinés à s'engager dans les alésages 141 du capot 120. Ces doigts 232 viennent en butée contre le contour des alésages 141 pour limiter la course de basculement de l'entraineur 230.

Chaque doigt 232 présente ici une forme de croix, mais on pourrait envisager que le doigt présente une autre forme, par exemple celle d'une flèche

Comme le montre mieux la figure 5, chaque doigt 232 de l'entraineur 230 comprend une tige centrale 233 avec une extrémité libre pointue 234 et deux bras cintrés 235 qui s'étendent de part et d'autre de la tige centrale 233. Ces bras 235 sont cintrés vers l'extrémité libre pointue 234 de la tige centrale 233.

L'extrémité libre pointue 234 de la tige centrale 233 de chaque doigt 232 est engagée dans le creux pointu 142 de l'alésage 141 correspondant du capot 120.

En fonctionnement normal, lorsque l'on appuie sur l'entraineur 230, celui-ci pivote, et les doigts 232 pivotent également autour des extrémités libres pointues 234 des tiges centrales 233. Si l'on appuie plus fort ou plus près du centre de l'entraineur 230, les extrémités libres des bras 235 viennent en contact avec l'un des rebords 143 de l'alésage 141 pour bloquer le mouvement de basculement de l'entraineur 230, selon l'axe transversal X2.

Ces éléments de limitation de la course de basculement de l'entraineur 230 forment également des éléments de fixation et de basculement qui sont complémentaires aux moyens de montage 130 décrits précédemment.

Par ailleurs, comme le montrent plus particulièrement les figures 2 et 4, le capot 120 comprend des éléments de protection 150 qui protègent les languettes 117 d'encliquetage prévues sur l'âme 110 métallique. Ces languettes 117 d'encliquetage sont engagées au travers d'ouvertures 151 du capot 120 pour être accessibles aux moyens d'encliquetage complémentaires de la plaque de façade enjoliveur (non représentée).

Chaque élément de protection 150 est une languette isolante qui recouvre la face avant d'une languette 117 d'encliquetage de l'âme 110 qui s'étend au travers d'une ouverture 151 du capot 120.

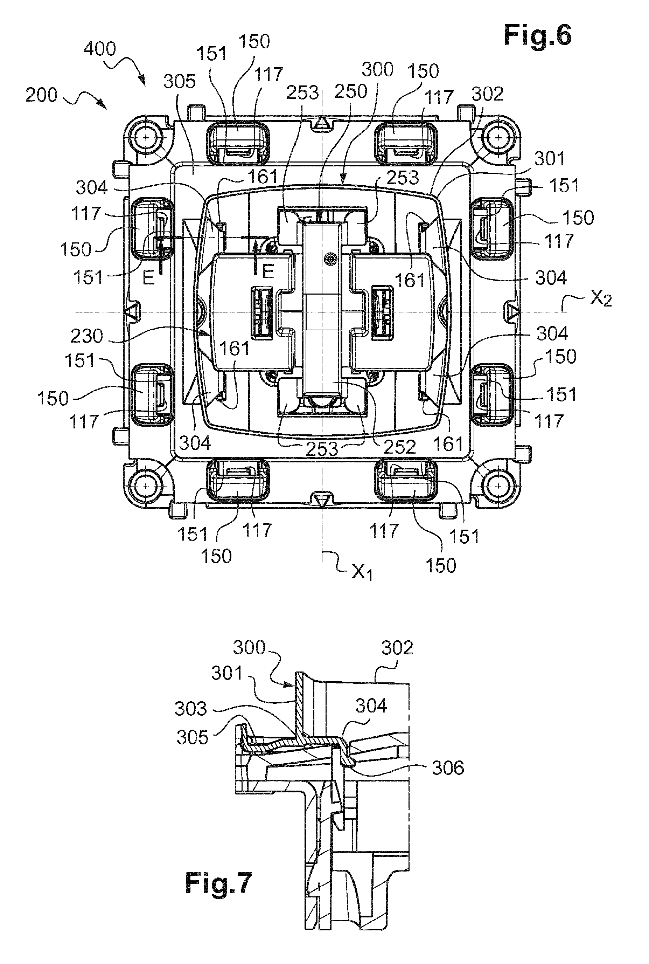

En outre, comme le montrent plus particulièrement les figures 2 et 6, le capot 120 comprend des moyens de montage 160 d'une membrane d'étanchéité 300.

Ces moyens de montage 160 sont ici agencés sur la face avant bossée 127 du cadre 121 du capot 120.

Ils sont ici formés par quatre ouvertures 161 de forme rectangulaire disposées au quatre coins d'un carré.

Comme le montre mieux la figure 7, la membrane 300 est une lèvre 301 qui suit un contour fermé et qui s'étend sensiblement perpendiculairement au plan défini par le cadre 121 du capot 120 pour entourer notamment l'entraineur 230. Le bord avant 302 de la lèvre 301 est destiné à coopérer avec la face arrière de la touche d'actionnement 270, et, le bord arrière 303 se prolonge, d'un côté, par des bras de maintien 304 qui s'engagent dans les ouvertures 161 du capot 120, et, de l'autre côté, par une jupe 305 qui recouvre au moins partiellement la face avant du capot 120.

Chaque bras de maintien 304 de la membrane 300 est coudé de manière à ce qu'il puisse être au moins en partie inséré dans l'ouverture 161 correspondante du cadre 121 du capot 120.

Chaque bras de maintien 304 comporte à une extrémité libre un moyen de retenue 306 dans l'ouverture 161 correspondante du capot 120. Ce moyen de retenue 306 est ici un renflement 306.

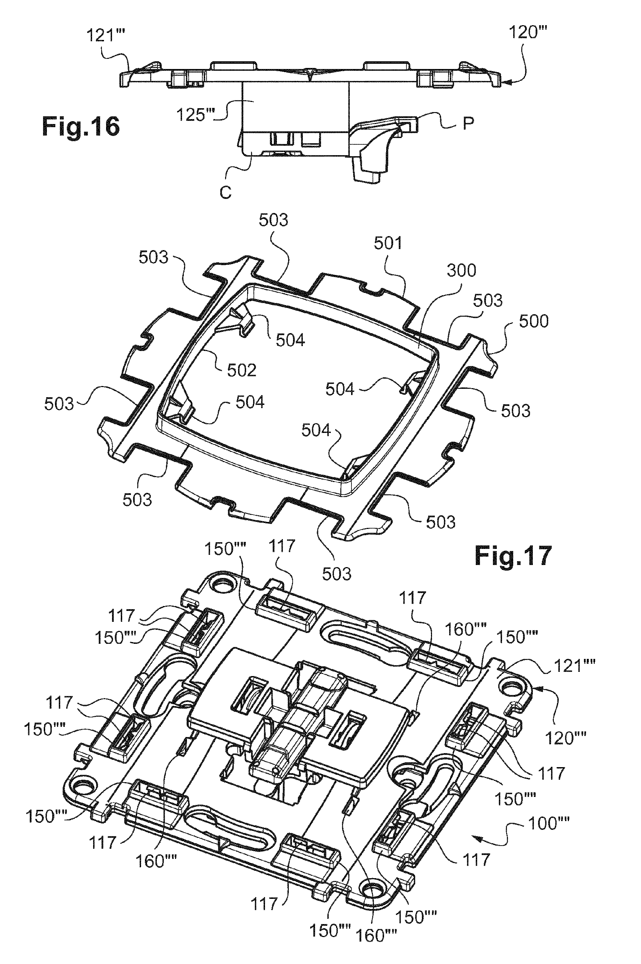

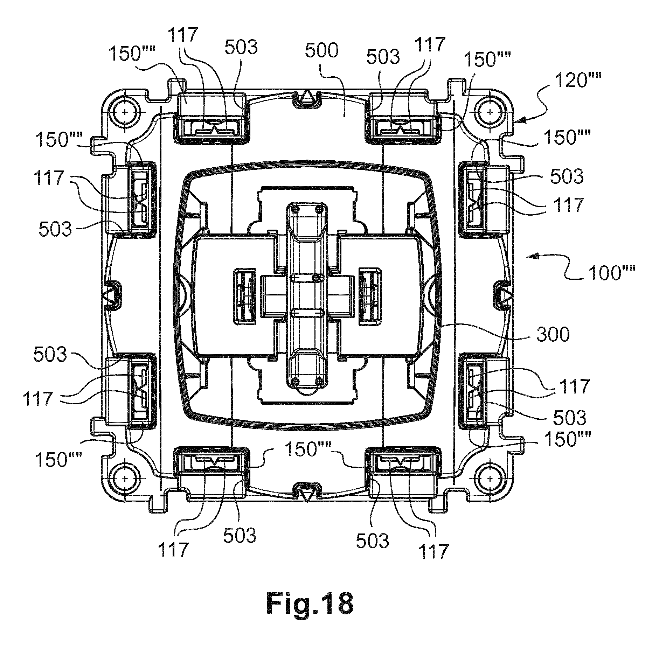

Selon une variante de réalisation du support 100"" représentée sur les figures 17 et 18, la membrane 300 est une simple lèvre qui suit le contour carré d'une ouverture intérieure d'une plaque 500 en forme de cadre. La membrane 300 s'élève vers l'avant du support 100"", globalement perpendiculairement au plan de la plaque 500. Elle est attachée à la plaque 500 par un moyen quelconque. Elle peut être surmoulée sur cette plaque ou être rapportée mécaniquement sur celle-ci par exemple par emboîtage. La plaque 500 comporte par ailleurs, des pattes d'accrochage 504, ici au nombre de quatre, qui s'étendent vers l'arrière de la plaque à partir du bord 502 de son ouverture intérieure, perpendiculairement au plan de ladite plaque 500. Ces pattes d'accrochage 504 sont adaptées à s'accrocher dans des ouvertures 160"" du capot 120"" lorsque la plaque 500 est rapportée sur la face avant du capot 120"" de manière à solidariser ladite plaque audit capot. Enfin, la plaque 500 comporte des échancrures 503 dans son bord périphérique externe. Comme le montre plus particulièrement la figure 18, lorsque la plaque 500 est rapportée sur la face avant du capot 120"" du support 100"", la membrane 300 entoure la partie électrique fonctionnelle de l'appareillage rapportée sur ledit support 100"" et les échancrures 503 entourent étroitement des murets 150"" du capot 120"" qui protègent les languettes 117 d'encliquetage prévues sur l'âme métallique, qui traversent des ouvertures de capot pour être accessibles à des moyens d'encliquetage complémentaires d'une plaque de façade enjoliveur (non représentée).

Comme le montrent plus particulièrement les figures 1 et 3, le capot 120 comprend des moyens de montage 170 d'un voyant lumineux 250.

Comme le montre la figure 1, le voyant lumineux 250 est alimenté par deux fils électriques 251. Ce voyant lumineux 250 comprend un corps 252 rectangulaire, et quatre pattes de fixation 253 qui s'étendent perpendiculairement au corps 252, aux quatre coins du corps 252.

Comme le montre plus particulièrement la figure 3, le voyant électrique 250 est inséré dans l'ouverture 124 centrale rectangulaire du cadre 121 du capot 120.

Chaque paroi longitudinale 128A de l'ouverture 124 centrale rectangulaire du cadre 121 du capot 120 comprend à ses extrémités un des moyens de montage 170 du voyant lumineux 250.

Chaque moyen de montage 170 présente ici une cavité 171 au fond arrondi orientée vers l'ouverture 124 centrale, pour permettre d'accueillir la patte de fixation 253 correspondante du corps 252 du voyant lumineux 250.

Ainsi, le cadre 121 du capot 120 présente ici quatre cavités 171 situées aux quatre coins de l'ouverture centrale 124 et qui coopèrent avec les pattes de fixation 253 du corps 252 du voyant lumineux 250.

Enfin, comme le montrent plus particulièrement les figures 8 et 9, le capot 120 comprend des moyens de montage 180 pour un autre voyant. En effet, ces moyens de montage 180 sont adaptés au montage d'un voyant (non représenté) alimenté par deux broches de connexion.

Le cadre 121 du capot 120 comprend ici deux poutres parallèles 181 s'étendant dans l'ouverture 124 centrale, selon un axe parallèle à l'axe transversal X2, pour séparer cette ouverture 124 centrale en trois parties de dimensions sensiblement égales.

Ces deux poutres parallèles 181 comprennent deux bords 182 en regard qui portent deux platines 183 orientées l'une vers l'autre.

Chaque platine 183 comprend ici deux trous 184 traversant, adaptés à être traversés par les broches de connexion du voyant.

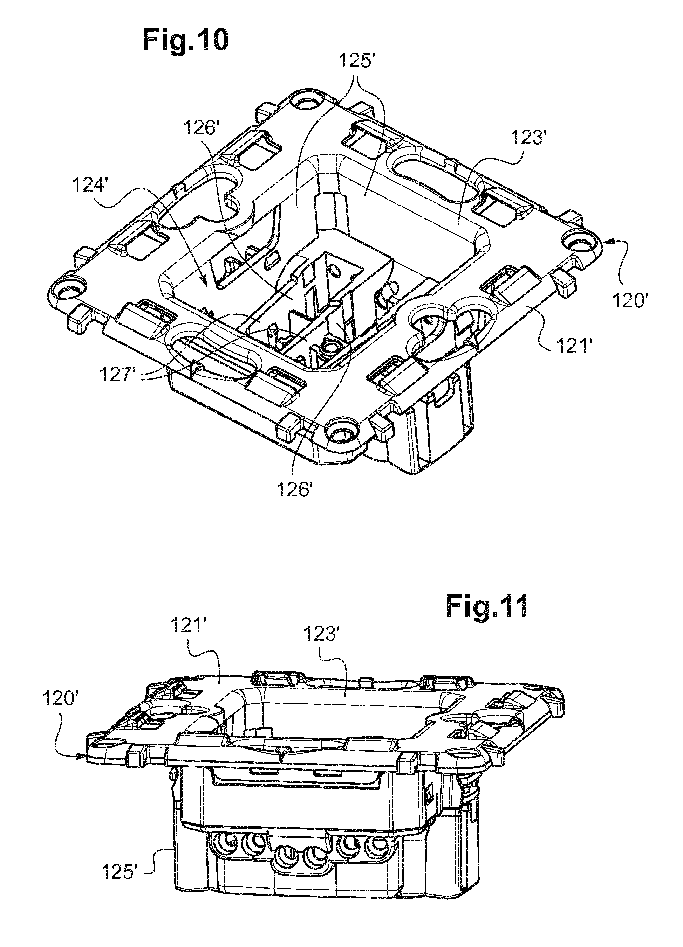

Sur les figures 10 et 11, on a représenté une variante du support conforme à l'invention, selon laquelle le capot 120' comporte des parois 125',127' qui délimitent des logements 126' d'accueil d'éléments de contact métalliques des bornes de connexion électrique d'une prise de courant. Plus particulièrement, les bords 123' de l'ouverture intérieure 124' du cadre 121' formé par le capot 120', sont prolongés vers l'arrière par des parois 125' qui délimitent un socle à l'intérieur duquel sont prévues des cloisons 127' qui séparent des logements 126' pour des éléments de contact métalliques de bornes de connexion électrique.

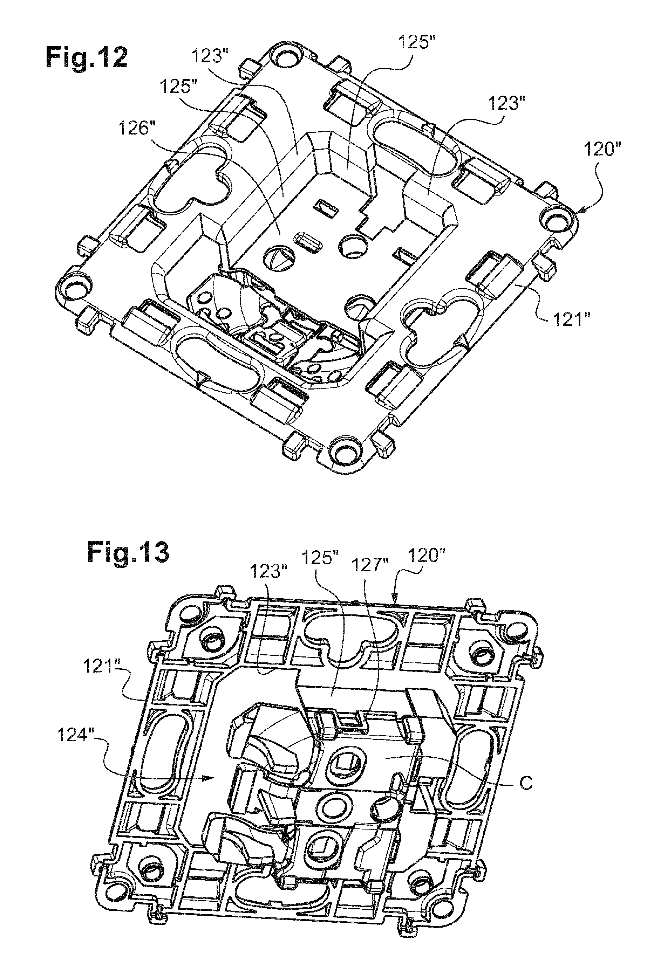

Sur les figures 12 et 13, on a représenté une autre variante du support conforme à l'invention, selon laquelle le capot 120" comprend une paroi 126" pour fermer l'ouverture avant d'une cassette C qui accueille notamment un volet d'obturation interdisant l'accès à des bornes de connexion électrique d'une prise de courant. Plus particulièrement, une partie des bords 123" de l'ouverture intérieure 124" du cadre 121" formé par le capot 120", est prolongée vers l'arrière par des parois 125" qui s'étendent perpendiculairement au cadre 121 ". Une paroi 126" de fermeture s'étend entre ces parois 125" parallèlement au cadre 121" à distance de celui-ci. Elle ferme l'ouverture avant de ladite cassette C rapportée à l'arrière dudit support, encliquetée sur des brides 127" prévues sur la face externe des parois 125" du capot 120". La paroi 126" de fermeture comprend des ouvertures pour accéder aux branches du volet. Les parois 125", 126" délimitent ainsi un puits d'insertion d'une fiche (non représentée) dont le fond est formé par la paroi 126" de fermeture.

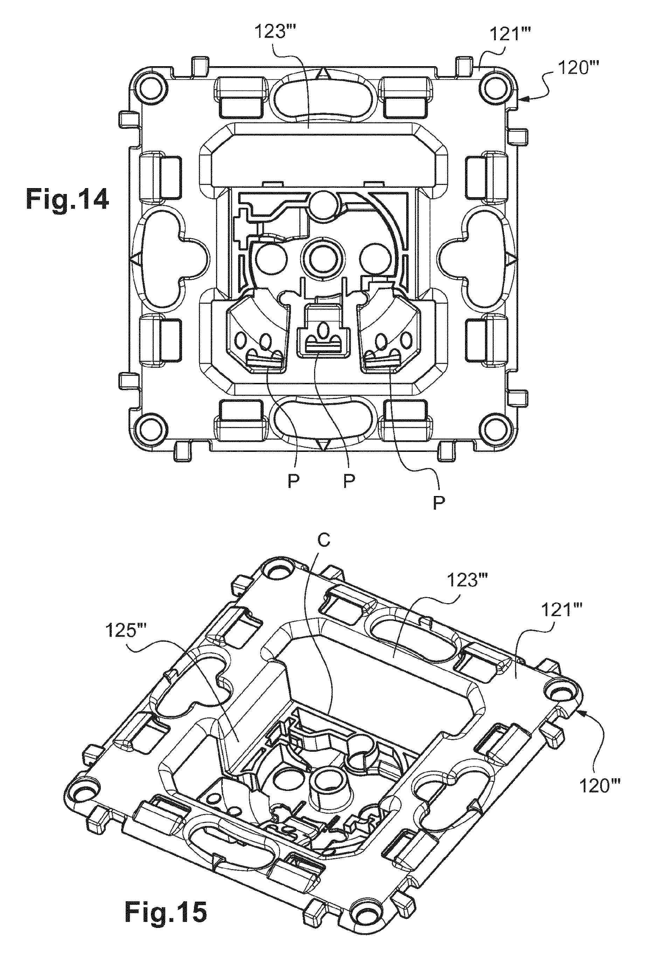

Sur les figures 14 à 16, on a représenté une autre variante du support conforme à l'invention, selon laquelle le capot 120"' comprend des moyens de réception 125"', C d'un volet d'obturation (non représenté) interdisant l'accès à des bornes de connexion électrique d'une prise de courant. Plus particulièrement, il est prévu deux parois 125"' qui s'étendent en parallèle vers l'arriére du capot 120"' à partir de deux côtés opposés du bord 123"' de l'ouverture intérieure du cadre 121"' formé par le capot 120"'. Entre ces deux parois 125"' s'étend, parallèlement au cadre 121"', l'ossature d'une cassette C destinée à loger ledit volet d'obturation. Cette cassette C comporte un fond, tourné vers l'avant du support, qui porte un pion central pour le montage à rotation du volet d'obturation. Ce fond est pourvu d'ouvertures de passage de broches d'une fiche électrique. Avantageusement, selon le mode de réalisation représenté sur les figures 14 à 16, il est prévu également des leviers P de déconnexion de bornes de connexion électrique, attachés au fond de la cassette C.

Avantageusement, selon tous les modes de réalisation représentés sur les figures 10 à 16, le capot 120' ; 120" ; 120"' est réalisé d'une seule pièce par moulage d'une matière plastique pour former avec ses agencements fonctionnels décrits ci-dessus une seule pièce monobloc.

## Revendications

1. Support (100) d'appareillage électrique qui comprend une âme (110) en matière métallique recouverte d'un capot (120) en matière synthétique isolante qui intègre de formation des agencements de réception d'au moins un élément fonctionnel destiné à coopérer directement avec au moins un élément conducteur pour assurer la fonction primaire d'un mécanisme d'appareillage électrique (200) à rapporter sur ledit support d'appareillage électrique.

2. Support (100) d'appareillage électrique selon la revendication précédente, dans lequel lesdits agencements de réception comprennent des moyens de montage (130) d'un entraineur d'interrupteur électrique (230).

3. Support (100) d'appareillage électrique selon la revendication 2, dans lequel lesdits moyens de montage comportent des éléments de fixation (130) dudit entraineur (230).

4. Support (100) d'appareillage électrique selon l'une des revendications 2 et 3, dans lequel lesdits moyens de montage (130) comportent des éléments de basculement (130) dudit entraineur (230).

5. Support (100) d'appareillage électrique selon la revendication précédente, dans lequel lesdits moyens de montage comportent des éléments de limitation de la course de basculement dudit entraineur (230).

6. Support d'appareillage électrique selon la revendication 1, dans lequel lesdits agencements de réception comprennent des parois (125',127') qui délimitent des logements (126') d'accueil d'éléments de contact métalliques des bornes de connexion électrique d'une prise de courant.

7. Support d'appareillage électrique selon la revendication 1, dans lequel lesdits agencements de réception comprennent une paroi (126") pour fermer l'ouverture avant d'une cassette qui accueille notamment un volet d'obturation interdisant l'accès à des bornes de connexion électrique d'une prise de courant.

8. Support d'appareillage électrique selon la revendication précédente, dans lequel lesdits agencements de réception comprennent des moyens de montage (125",127") de ladite cassette.

9. Support d'appareillage électrique selon la revendication 1, dans lequel lesdits agencements de réception comprennent des moyens de réception (125"', C) d'un volet d'obturation interdisant l'accès à des bornes de connexion électrique d'une prise de courant.

10. Support d'appareillage électrique selon la revendication 1, dans lequel lesdits agencements comprennent des leviers (P) de déconnexion de bornes de connexion électrique d'une prise de courant.

11. Support (100) d'appareillage électrique selon l'une des revendications précédentes, dans lequel le capot (120) est réalisé d'une seule pièce par moulage d'une matière plastique.

12. Support (100) d'appareillage électrique selon l'une des revendications précédentes, dans lequel ledit capot (120) est rapporté sur l'âme (110) métallique.

13. Appareillage électrique (400) qui comprend :
- un support (100) d'appareillage électrique selon l'une des revendications précédentes, et
- un mécanisme d'appareillage électrique (200) rapporté sur ledit support (100) d'appareillage électrique.
